# EUROPÄISCHE PATENTSCHRIFT

(11) **EP 2 791 244 B1**
(45) Veröffentlichungstag und Bekanntmachung des Hinweises auf die Patenterteilung: **11.05.2016**
(21) Anmeldenummer: 13701440.3
(22) Anmeldetag: 25.01.2013
(51) Int. Cl.: C08L 61/20, C09J 161/20, B27N 3/00, B32B 21/00

(54) **KLEBSTOFFZUSAMMENSETZUNGEN UND DEREN VERWENDUNG**
ADHESIVE COMPOUNDS AND USE OF SAME
COMPOSITIONS D'ADHÉSIFS ET LEUR UTILISATION

(30) Priorität: 26.01.2012 EP 12152583
(43) Veröffentlichungstag der Anmeldung: 22.10.2014
(73) Patentinhaber: SWISS KRONO Tec AG, 6006 Luzern (CH)
(72) Erfinder: KALWA, Norbert, 32805 Horn-Bad Meinberg (DE)
(74) Vertreter: Kröncke, Rolf
(86) Internationale Anmeldenummer: PCT/EP2013/051393
(87) Internationale Veröffentlichungsnummer: WO 2013/110738

(56) Entgegenhaltungen:
- EP-A2- 0 352 558
- WO-A1-02/22332
- US-A- 5 179 143
- US-A1- 2002 143 085
- US-A1- 2007 054 144
- US-B1- 6 465 104

## Beschreibung

Die vorliegende Erfindung betrifft neue Formulierungen für Klebstoffzusammensetzungen sowie Klebstoffzusammensetzungen insbesondere für einen hybriden Klebstoff umfassend mindestens eine Mischung eines Aminoharzes und mindestens eines Polyethers und die Kombination dieser Mischung mit Isocyanaten sowie die Verwendung von Polyethern in Klebstoffen auf Basis von Aminoharzen. Diese Klebstoffzusammensetzungen sind insbesondere geeignet als Klebstoffe für Holzwerkstoffe, insbesondere OSB-Platten, Faserplatten oder Spanplatten verwendet zu werden. In einem weiteren Aspekt betrifft die vorliegende Erfindung Verfahren zur Herstellung solcher Holzwerkstoffe aus Lignozellulose-haltigen Zerkleinerungsprodukten, insbesondere Verfahren zur Herstellung von OSB-Platten, Holzfaserplatten oder Spanplatten, wobei die Lignozellulose-haltigen Zerkleinerungsprodukte mit der erfindungsgemäßen Klebstoffzusammensetzung in Kontakt gebracht wird und anschließend die Holzwerkstoffe durch Verpressen unter Wärmebehandlung erhalten werden. Schließlich richtet sich die vorliegende Erfindung auf entsprechend erhältliche Holzwerkstoffe.

### Stand der Technik

Zur Verleimung von Holzwerkstoffen werden seit Jahren im Wesentlichen drei verschiedenen Klebstoffarten eingesetzt. Hierbei handelt es sich um Klebstoffe auf Aminoharzbasis, wie auf Harnstoffformaldehydbasis, Klebstoffe auf Phenolformaldehydbasis sowie Diisocyanatklebstoffe. Unter Harnstoffharze versteht man gemäß DIN 7728 Aminoplaste, die als Kondensationsprodukte aus Harnstoff bzw. Harnstoffderivaten und Aldehyden, und hier insbesondere Formaldehyd, hergestellt und üblicherweise thermisch ausgehärtet werden können. Diese, auch als UF-Harze bezeichneten Harnstoffharze werden sowohl als getrocknete Pulverklebstoffe als auch in flüssiger Form eingesetzt.

Aufgrund der geringen Kosten finden Harnstoffharze umfangreiche Anwendung auf dem Gebiet der Herstellung der Holzwerkstoffe. Weiterhin zeigen Harnstoffharze eine gute Trockenbindefestigkeit. Harnstoffharze, wie Harnstoffformaldehydharze, aber auch Phenolformaldehydharze werden zur Verbesserung der mechanischen Eigenschaften bzw. der Wasserfestigkeit mit Melaminharzen verstärkt.

Harnstoffharze gehören zu der Gruppe der Duromere, die über Polykondensationsreaktion aushärten. Sie reagieren zwar schnell allerdings zu sehr harten und spröden Makromolekülen. Zudem ist die Wasserlöslichkeit dieser beiden Klebstoffe nicht besonders gut, so dass diese Klebstoffe in einem Konzentrationsbereich von 50 Gew.-% bis 70 Gew.-% Feststoffgehalt eingesetzt werden müssen. Diese Eigenschaften sind allerdings bei einer Applikation z.B. auf Holz im Hinblick auf die Verteilung der Klebstoffe und die Benetzung des zu verklebenden Materials negativ. D.h., üblicherweise ist die Verteilung des Klebstoffes die z.B. durch Aufsprühen erreicht wird, besser je verdünnter der Klebstoff eingesetzt wird. Obwohl die Harnstoffharze zwar unter Kostenaspekten die günstigste Lösung zur Herstellung von Holzwerkstoffen ist, liefern diese allerdings von der Qualität der Verklebung schlechtere Ergebnisse als andere Klebstoffe. Des Weiteren sind diese Klebstoffe in Bezug auf ihre Reaktivität weniger beeinflussbar als andere Klebstoffe, wie z.B. Isocyanatklebstoffe.

Bei Kombinationen von Harnstoffklebstoffen mit anderen nicht-Hanrstoffharz-, Phenolharz- oder Melaminharzklebstoffen, um z.B. die oben beschriebenen nachteiligen Eigenschaften der Harnstoffharze zu überwinden, tritt häufig das Problem von Unverträglichkeiten zwischen den einzelnen Klebstoffen bzw. Mischungsprobleme auf. Entsprechend können Mischungen der einzelnen Klebstoffkomponenten nicht einfach hergestellt werden. Vielmehr können Phasentrennungen auftreten, die zu einer Heterogenität in verklebten Bereichen führen. Weiterhin können die Verklebeeigenschaften sehr unterschiedlich sein, einschließlich Kinetik, Struktur, Morphologie. Zur Überwindung dieses Problems wurden verschiedene Verbesserungen vorgeschlagen:

Der Einsatz von Tensiden soll die Mischbarkeit verbessern. Eine Modifikation von Aminoharz oder insbesondere Isocyanat soll die Kompatibilität verbessern. Spezielle Mischverfahren sollen ein verbessertes Vermischen der einzelnen Komponenten erlauben. Allerdings zeigten alle Vorschläge sowohl technische als auch wirtschaftliche Nachteile auf. So ist in der WO 02/22332 ein Hybridharz aus Phenolformaldehydharzen und Isocyanatharzen beschrieben, bei dem zur Verbesserung der Stabilität die Phenolformaldehydharze geschützt werden. Die US 6,465,104 B1 beschreibt Schmelzklebstoffe mit modifizierten Polyurethanen, die im wesentlichen Polycarbonsäureester, Polyole und Polyisocyanate enthalten. Die einzelnen Komponenten werden dabei als Feststoffe vermischt.

Insbesondere im Faserplattenbereich finden die oben genannten Harnstoffharze als Klebstoffe Anwendung. Allerdings ist der Einsatz solcher Faserplatten in Bereichen mit hoher Feuchtigkeit oder sogar direkt unter Wassereinwirkung mit Klebstoffen auf Harnstoffbasis kaum möglich, da diese Klebstoffe nicht hydrolysebeständig sind.

Es besteht daher ein Bedarf nach neuen Klebstoffzusammensetzungen, die die oben genannten Nachteile überwinden. D.h. es sollen Klebstoffe auf Harnstoffbasis bereitgestellt werden, die eine höhere Stabilität gegenüber Feuchteinwirkung haben und die eine verbesserte Reaktion mit anderen Klebstoffen erlauben. Der Klebstoff soll weiterhin eine höhere Elastizität und geringere Sprödigkeit aufweisen. Die chemische Stabilität ist bevorzugt erhöht und zusätzlich wird eine verringerte Emission von Formaldehyden und anderen flüchtigen oder sehr flüchtigen organischen Verbindungen erreicht.

Der vorliegenden Erfindung liegt entsprechend die Aufgabe zugrunde, solche Klebstoffe bereitzustellen. Ein weiterer Aspekt ist die Verwendung dieser Klebstoffe bei der Herstellung entsprechender Holzwerkstoffe sowie diese Holzwerkstoffe selbst. Des Weiteren stellt die Erfindung die Verwendung von Polyethern zur Verbesserung der Mischbarkeit von Aminoharzen mit anderen Klebstoffen sowie Verfahren zur Herstellung von Aminoharz-haltigen, insbesondere Harnstoff-haltigen Klebstoffen, wobei ein Polyether dem Aminoharz zugemischt wird, bereit. Schließlich richtet sich die Anmeldung auf Verfahren unter Einsatz der neuen Klebstoffe.

### Beschreibung der Erfindung

Die Aufgabe der vorliegenden Erfindung wird dadurch gelöst, dass neue Formulierungen für Klebstoffzusammensetzungen und Klebstoffzusammensetzungen, die insbesondere für hybride Klebstoffe geeignet sind, mit einer ersten Komponente, die aus mindestens einem Aminoharz wie Harnstoffharz, und mindestens einem Polyether gebildet sind, bereitgestellt werden.

Unter den Ausdruck "Aminoharze" werden Kondensationsprodukte aus Aldehyden, insbesondere Formaldehyd, und Aminogruppen-aufweisende Verbindungen, insbesondere Harnstoff, Melamin, Benzoguanamin, Glycoluril, Acetoguanamin, Biuret und Mischungen hiervon verstanden.

Vorliegend wird dabei unter dem Ausdruck "Harnstoffharz" ein Kondensationsprodukt aus Harnstoff bzw. Harnstoffderivaten und Aldehyden, insbesondere Formaldehyd, die chemisch bzw. thermisch ausgehärtet werden können, verstanden. Die Harnstoffharze, auch als UF-Harze bezeichnet, können des Weiteren weitere Bestandteile aufweisen, wie Melamin, um Melamin-Harnstoff-Formaldehydharze auszubilden bzw. wie Phenol, um Harnstoff-Phenol-Formaldehydharze auszubilden, bzw. Kombinationen hiervon, um Melamin-Harnstoff-Phenol-Formaldehydharze auszubilden.

Unter dem Ausdruck "Polyether" werden vorliegend Verbindungen verstanden, die mindestens eine Ethylenoxideinheit oder Propylenoxideinheit, und mindestens eine Isocyanat-reaktive Gruppe aufweist, wobei diese Isocyanatreaktive Gruppe ausgewählt ist aus einer Gruppe umfassend Hydroxyl, Amino, Epoxy, und Thiol, bevorzugt Hydroxyl.

Unter dem Ausdruck "Isocyanate" werden vorliegend monomere, dimere, Oligomere und polymere Isocyanate verstanden, solange nicht anders ausgeführt.

Das hierin verwendete Polyether kann eine Mischung von verschiedenen Alkoxylierungsprodukten von Polyolen sein. Bevorzugte Polyole schließen solche ein, in denen polymerisierte Propylenoxideinheiten und/oder polymerisierte Ethylenoxideinheiten vorhanden sind. Diese Einheiten können statistisch verteilt sein in Form von Polyethylenoxidblöcken innerhalb dieser Ketten und/oder Enden.

Der Ausdruck "Polyether" umfasst mindestens eine Ethylenoxideinheit oder Propylenoxideinheit. Die bezieht sich auf Einheiten der Formel (-CH₂-CH₂-O-, Ethylenoxid bzw. -CH₂-CH₂-CH₂-O-, Propylenoxid). Die erfindungsgemäß eingesetzten Polyether sind bevorzugt Polyole.

Unter dem Ausdruck "Polyol" werden vorliegend Verbindungen verstanden, die mehrere Hydroxylgruppen (OH) enthalten. Polyole können auch als Polyalkohole bezeichnet werden. Polyole können sowohl linear als auch zyklisch vorliegen. Polyole sind insbesondere solche Alkohole, die ein Oligo- oder Polymer aus kurzkettigen Alkoholen darstellen, wie Polyalkylenglykole oder oligomere Glycerine.

Unter dem Ausdruck "hybride Klebstoffe" werden Klebstoffe oder Harze verstanden, die aus mindestens zwei Komponenten zusammengesetzt sind.

Die Ausdrücke "umfassen" oder "umfassend" sowie "enthalten" oder "enthaltend", die hierin synonym verwendet werden, sind als offene Formulierungen zu verstehen und schließen nicht aus, dass weitere Bestandteile vorhanden sind. Es ist klar, dass diese Ausdrücke die Ausführungsform der abschließenden Ausdrücke "bestehen" oder "bestehend" umfassen.

In einer bevorzugten Ausführungsform handelt es sich bei der erfindungsgemäßen Klebstoffzusammensetzung um eine, bei der das Polyol ein Polyalkylenglycol, ein oligomeres Glycerin, oder ein Oligo- oder Polysaccharid ist.

In einer besonders bevorzugten Ausführungsform ist in der erfindungsgemäßen Klebstoffzusammensetzung der Polyether ein Polyol mit der allgemeinen Formel (I):

R₃O-[(CHR₁)ₓ-O]ₙ-R₂

wobei R₁ unabhängig voneinander ausgewählt ist aus H, OH, OR₄ oder C(O)R₅; wobei
R₄ unabhängig voneinander ausgewählt ist aus Wasserstoff oder einer C₁-C₆ Alkylgruppe;
R₅ ist unabhängig voneinander ausgewählt aus Wasserstoff, OH, OR₄ oder N(R₄)₂;
R₂ und R₃ sind unabhängig voneinander ausgewählt aus Wasserstoff oder einem Kohlenwasserstoff, der Heteroatome enthalten kann;
x ist unabhängig voneinander eine ganze Zahl von 1 bis 10;
n ist eine ganze Zahl von 1 bis 30, bevorzugt, 1 bis 20.

Das Polyol weist dabei mindestens zwei Hydroxylgruppen, wie mindestens drei Hydroxylgruppen auf.

Das Polyol ist z.B. insbesondere Polyethylenglycol oder Polypropylenglycol mit bevorzugt mittleren Molekülmassen von 62 bis 2.000 g/mol, bevorzugt eines mit einer mittleren Molekülmasse von 100 bis 800 g/mol.

D.h., es ist insbesondere bevorzugt, dass die Polyolkomponente ein kurzkettiges Polydiol oder Triol darstellt, wie ein Ethylenglycol, Propylenglycol, Butylenglycol oder Oligomere oder Polymere hiervon. Weiterhin umfasst es entsprechende Oligo- oder Polymere von Mischungen dieser Komponenten. Diese Komponenten können allein oder als Mischungen vorliegen.

Bevorzugt Beispiele von Polyether, wie sie erfindungsgemäß verwendet werden können, schließen solche ein erhalten durch Polymerisation von Ethylenoxid einschließlich Produkten erhalten durch Copolymerisation von Ethylenoxid mit anderen zyklischen Oxiden, z.B. Propylenoxid, in Anwesenheit einer Initiatorverbindung, bevorzugt in Anwesenheit von mindestens einem oder mehr polyfunktionalen Initiatoren. Geeignete Initiatorverbindungen enthaltend eine Vielzahl von aktivem Wasserstoffatomen und umfassend Wasser und niedermolekular gewichtigen Polyethan, z.B. Ethylenglycol, Propylenglycol, Diethylenglycol, Dipropylenglycol, Cyclohexandimethanol, Resorzinol, Bisphenol A, Glycerol, Trimethylolpropan, 1,2,6-Hexantriol, Pentaeritritol und dergleichen. Mischungen hiervon und entsprechenden zyklischen Oxiden können verwendet werden.

Es wurde überraschend festgestellt, dass die Polyether die Mischbarkeit der Aminoharze, wie der Harnstoffharze, mit anderen Klebstoffen verbessern. Das heißt, bei einem Vermischen der Aminoharze, wie der Harnstoffharze, mit einem anderen Klebstoff, wie Isocyanat basierte Klebstoffe, kann ein vorheriges Vermischen mit dem Polyol die Mischbarkeit mit dem weiteren Klebstoff verbessern.

Es ist bevorzugt, dass das Aminoharz ein Harnstoffharz ist, insbesondere eines ausgewählt aus Harnstoff-Formaldehydharz, Melamin-Harnstoff-Formaldehydharz, Melamin-Harnstoff-Phenol-Formaldehydharz oder Mischungen hiervon.

Die Menge an Polyether, insbesondere Polyol, bezogen auf die Menge an Aminoharz liegt dabei bevorzugt in einem Bereich von 0,1 bis 20 Gew.-%, wie 0,1 bis 15 Gew.-%, z.B. 0,5 bis 10 Gew.-%, wie 2 bis 8 Gew.-%, z.B. bis zu 9, 8, 7, 6, 5 oder 4 Gew.-% und minimal mindestens 0,5, 1, 2 oder 3 Gew.-%.

In einigen Ausführungsformen kann der Polyether in einer Menge von mindestens 0,01 Gew.-% bezogen auf 100 Gew.-% der Klebstoffzusammensetzung mit erster und zweiter Komponente vorhanden sein. Bevorzugt liegt das Polyether in einer Menge von mindestens 0,05, wie 0,1 Gew.-%, bevorzugt 0,3 Gew.-%, wie bevorzugt 0,5 Gew.-% bezogen auf 100 Gew.-% der Zusammensetzung vor.

Aufgrund des Vorhandenseins von Polyether, wie Polyol, im Aminoharz, insbesondere Harnstoffharz ist es möglich, das Aminoharz mit anderen Klebstoffen, wie Isocyanaten und Epoxidharzen, aber gegebenenfalls auch Phenolharzen, Melaminharzen, Polyurethanharzen, Protein-Phenolklebstoffe, Polyacrylate, formaldehydfreie Klebstoffe auf der Basis von polymerisierten Acrylsäuren und anderen wässrigen Klebstoffsystemen zu vermischen, um u. a. hybride Klebstoffe zu erhalten.

Bevorzugt ist der zweite Klebstoff dabei mindestens ein Epoxid oder Isocyanat, insbesondere ein Isocyanat, ausgewählt aus der Gruppe enthaltend aliphatische und aromatische Isocyanate.

D.h., erfindungsgemäß umfasst die Klebstoffzusammensetzung bzw. die Formulierung für eine Klebstoffzusammensetzung als zweite Komponente ein Isocyanat. In einer Ausführungsform umfasst das Isocyanat mindestens eine Polycyanatverbindung.

Im Folgenden werden beispielhaft geeignete Polyisocyanate, die erfindungsgemäß verwendet werden können, genannt: organische Polyisocyanatverbindungen oder Mischungen von organischen Polyisocyanatverbindungen, bevorzugt wobei diese Verbindungen mindestens zwei Isocyanatgruppen aufweisen. Beispiele für organische Polyisocyanate schließend ein: Diisocyanate, insbesondere aromatische Diisocyanate und Isocyanate mit höherer Funktionalität. Beispiele hierfür schließen weiterhin ein aliphatische Isocyanate, wie Hexamethylendiisocyanat und aromatische Diisocyanate, wie Diphenylmethandiisocyanat (MDI) in Form der 2,4'-, 2,2'- und 4,4'-Isomere und Mischungen davon (auch als reines MDI bezeichnet), Mischungen von Diphenylmethandiisocyanat (MDI) und Oligomeren hiervon (als polymeres MDI bezeichnet), m- und p-Phenylendiisocyanat, Toluylen-2,4- und Toluylen-2,6-Diisocyanat (auch bekannt als Toluoldiisocyanat (TDI), wie 2,4-TDI und 2,6-TDI in einer geeigneten isomeren Mischung, Chlorphenylen-2,4-Diisocyanat, Naphthylen-1,5-Diisocyanat, Diphenylen-4,4'-Diisocyanat, 4,4'-Diisocyanat-3,3'-Dimethyl-Diphenyl, 3-Methyl-Diphenylmethan-4,4'-Diisocyanate und Diphenylethadiisocyanat sowie cycloaliphatische Diisocyanate, wie Cyclohexan-2,4- und -2,3-Diisocyanat, 1-Methylcyclohexyl-2,4- und -2,6-Diisocyanat und Mischungen davon und bis-Isocyanatocyclohexyl)Methan (z.B. 4,4'-Diisocyanatodicyclohexylmethan (H12MDI), Triisocyanate, wie 2,4,6-Triisocyanatotoluol und 2,4,4-Triisocyanatodiphenylether, Isophorondiisocyanat (IPDI), Butylendiisocyanat, Trimethylhexamethylendiisocyanat, Isocyanato-methyl-1,8-Oktandiisocyanat, Tetramethylxylendiisocynat (DMXDI), 1,4-Cyclohexandiisocyanat (CDI), und Tolidindiisocynat (TODI).

Modifizierte Polyisocyanate enthaltend Isocynanurat-, Carbodiimide- oder Uretonimingruppen können ebenfalls angewendet werden. Weiterhin können blockierte Polyisocyanate, wie Reaktionsprodukte von Phenol oder einem Oxim in einem Polyisocyanat verwendet werden, bevorzugt ein blockiertes Polyisocyanat mit einer Entblockungstemperatur unterhalb der Temperatur, die eingesetzt wird, wenn die Polyisocyanatzusammensetzung benutzt wird. Mischungen von Isocyanaten können eingesetzt werden.

In einer Ausführungsform kann das Isocyanat auch ein emulgierbares Polyisocyanat sein. Geeignete emulgierbare Isocyanate können z.B. emuligerbare MDI sein, wie offenbart in EP 18061, EP 516361, GB 1523601, GB 1444933 oder GB 2018796. Geeignete emulgierbare Polyisocyanate sind unter anderem kommerziell erhältlich von Huntsman unter der Handelsmarke Suprasec, z.B. Suprasec 1042, Suprasec 2405, Suprasec 2408 und Suprasec 2419 von Huntsman, USA.

Bevorzugte Vertreter von aliphatischen Isocyanaten sind z.B. Hexamethylendiisocyanat (HDI), Isophorondiisocyanat (IPDI) und 1,4-Cyclohexyldiisocyanat (CHDI). Bevorzugte aromatische Polyisonate schließen ein polymeres Diphenylmethandiisocyanat (PMDI), Toluylendiisocyanat (TDI) und Diphenylmethandiisocyanat (MDI). Besonders bevorzugt ist der zweite Klebstoff, der in der erfindungsgemäßen Klebstoffzusammensetzung vorliegt, ein Klebstoff auf Basis von Diisocyanaten, insbesondere PMDI.

Die Menge an dem Isocyanat bezogen auf das Harnstoffharz liegt dabei bevorzugt in einem Bereich von 0,5 Gew.-% bis 40 Gew.-%. Besonders bevorzugt sind die Mengen im Bereich von 10 bis 30 Gew.-%, wie 15 bis 25 Gew.-%, insbesondere 20 Gew.-% bezogen auf die Menge an Harnstoffharz.

In einigen Ausführungsformen kann das mindestens eine Isocyanat in einer Menge von mindestens 0,5 Gew.-% bezogen auf 100 Gew.-% der Gesamtformulierung vorliegen, z.B. in einer Menge von mindestens 10 Gew.-% wie mindestens 15 Gew.-% bezogen auf die Gesamtmenge der Formulierung bzw. der Klebstoffzusammensetzung. Das mindestens eine Isocyanat kann z.B. in einer Menge von 0,5 bis 60 Gew.-%, wie 5 bis 40 Gew.-%, z.B. 10 bis 30 Gew.-% bezogen auf 100 Gew.-% der Gesamtformulierung vorliegen.

In einer Ausführungsform besteht die Formulierung bzw. die Hybrid-Klebstoffzusammensetzung aus einer vermischten Komponente aus Aminoharz wie vorliegend definiert und einem Polyether, wie vorliegend definiert und einer weiteren Komponente aus einem Isocyanat, wie vorliegend definiert.

Die erfindungsgemäße Klebstoffzusammensetzung kann dabei derart vorliegen, dass bei der Herstellung hiervon der Polyether zuerst mit dem Aminoharz vermischt wird und anschließend eine mögliche weitere Komponente hinzugefügt wird, um dann als Klebstoffzusammensetzung verwendet zu werden. Bevorzugt liegt die Klebstoffzusammensetzung gemäß der vorliegenden Erfindung als Hybrid-Klebstoffzusammensetzung in mindestens zwei voneinander getrennten Komponenten bzw. als Formulierung von zwei Komponenten vor. Dabei weist die eine Komponente das Aminoharz und Polyether miteinander vermischt auf und die mindestens zweite Komponente den weiteren Klebstoff, wie dem Isocyanatklebstoff. Es ist insbesondere bevorzugt, dass bei der Herstellung der Klebstoffzusammensetzung das der Polyether mit dem Aminoharz zuerst vermischt wird. Anschließend kann ein weiterer Klebstoff, z.B. der Isocyanatklebstoff zugemischt werden. Die Zumischung des weiteren Klebstoffs findet bevorzugt unmittelbar vor der Aushärtung statt, um eine Umsetzung des zweiten Klebstoffs, wie Isocyanat, mit dem Polyether zu verhindern. D.h. bevorzugt findet der Prozess so spät wie möglich statt, um Voraushärtungen zu vermeiden.

In einer bevorzugten Ausführungsform wird daher die Mischung aus Aminoharz und Polyether getrennt oder, bevorzugt, als Mischung zuerst aufgebracht und unmittelbar vor Aushärtung des Klebstoffs die zweite Komponente mit dem Isocyanat aufgebracht.

In einigen Ausführungsformen kann die erfindungsgemäße Formulierung bzw. erfindungsgemäße Klebstoffzusammensetzung mindestens ein weiteres Additiv enthalten. Diese Additive können solche sein, ausgewählt aus der Gruppe eines Härters, Tensids, eines Wachses oder eines Pigmentes. Dem Fachmann sind entsprechend geeignete Zusatzstoffe bekannt. Dem Fachmann sind weiterhin geeignete Mengen zum Zusetzen dieser Zusatzstoffe zu der Gesamtformulierung bekannt.

Es zeigte sich, dass die Mischung aus Polyether mit Aminoharz ein Vermischen mit weiteren Klebstoffen erlaubt, ohne oder unter nur geringer Phasenausbildung der Mischungen.

In einer erfindungsgemäßen Ausführungsform liegen dabei die Komponenten zumindest teilweise, wie z. B. vollständig, in flüssiger Form vor. Die Vermischung der Komponente mit Aminoharz und Polyether mit der weiteren Komponente, wie der Isocyanatkomponente erfolgt in einer Ausführungsform derart, dass die Komponenten in flüssiger Form vorliegen, wie in flüssiger Form bei Raumtemperatur.

Des Weiteren konnte überraschend festgestellt werden, dass im Vergleich zu Klebstoffzusammensetzungen ohne Polyetheranteil die Aushärtung deutlich schneller erfolgt. So zeigte sich z.B., dass die Aushärtung bei einer Mischung von Isocyanat mit Harnstoffharz nur langsam erfolgt, während bei Zugabe eines erfindungsgemäßen Anteils an Polyether, wie Polyol, die Aushärtung sehr schnell erfolgt.

Diese aufgefundene Eigenschaft des Polyethers konnte nicht erwartet werden und ist somit als überraschend anzusehen. Die Verwendung der erfindungsgemäßen Hybrid-Klebstoffzusammensetzung erlaubt die Herstellung von Holzwerkstoffen mit verbesserten Eigenschaften. Insbesondere ist die Verwendung der erfindungsgemäßen Klebstoffe bei der Herstellung der Holzwerkstoffe vorteilhaft gegenüber den bisher genutzten Klebstoffen. Die erfindungsgemäßen Klebstoffe zeigen auf Basis der besseren Benetzbarkeit der Holzwerkstoffe und der Mischbarkeit mit anderen Klebstoffen Vorteile auf. Diese Vorteile schließen die bessere Mischbarkeit mit anderen Klebstoffen aber auch die verbesserte Aushärtung bei der Herstellung ein und somit die Verbesserung der Qualität der Verklebung. Der erfindungsgemäße Klebstoff zeigte eine bessere Reaktion zwischen den einzelnen Komponenten auf. Nach Aushärtung ist der Klebstoff stabiler gegenüber Feuchteeinwirkung. Weiterhin zeigt er eine höhere Elastizität und geringere Sprödigkeit sowie verbesserte chemische Stabilität auf. Schließlich kann die Emission von Formaldehyd und anderen flüchtigen und sehr flüchtigen organischen Verbindungen verringert werden. Die Klebstoffzusammensetzung gemäß der vorliegenden Erfindung eignet sich insbesondere bei der Herstellung von Holzwerkstoffen, wie OSB (oriented strand boards)-Platten, Faserplatten oder Spanplatten.

In einem weiteren Aspekt richtet sich die vorliegende Anmeldung auf ein Verfahren zur Herstellung von Holzwerkstoffen aus Lignozellulose-haltigen Zerkleinerungsprodukten, insbesondere OSB-Platten, Holzfaserplatten oder Spanplatten, umfassend die Verfahrensschritte:
a) Inkontaktbringen von Lignozellulose-haltigen Zerkleinerungsprodukten mit einer Formulierung für eine Klebstoffzusammensetzung bzw. der Klebstoffzusammensetzung gemäß der vorliegenden Erfindung; und
b) Verpressen der Mischung aus a) unter Wärmebehandlung.

Dabei können die Komponenten der Formulierung für eine Klebstoffzusammensetzung bzw. die Klebstoffzusammensetzung im Schritt a), d.h. beim Inkontaktbringen mit den Lignozellulose-haltigen Zerkleinerungsprodukten, als eine erste Zusammensetzung aus Aminoharz und Polyether und ggf. einer zweiten Zusammensetzung einen anderen Klebstoff, insbesondere Isocyanat, zu den Lignozellulose-haltigen Zerkleinerungsprodukten zudosiert werden.

Die Zudosierung kann dabei gemäß bekannter Verfahren erfolgen. Bevorzugt wird die Formulierung oder Klebstoffzusammensetzung dabei mittels Blow-Line, Mischer oder Coils beigemischt. Alternativ kann die erfindungsgemäße Klebstoffzusammensetzung als vollständige Mischung oder in den einzelnen Komponenten aufgesprüht oder aufgedüst werden. Dem Fachmann sind geeignete Verfahren bekannt.

Es ist auch möglich, die erfindungsgemäße Zusammensetzung mittels Trockenbeleimung mit dem Lignozellulose-haltigen Zerkleinerungsprodukten in Kontakt zu bringen. Die Zusammensetzung wird hier durch extrem feines Verdüsen auf die getrockneten Lignozellulose-haltigen Zerkleinerungsprodukte aufgebracht. Da der thermisch intensive Trocknungsprozess im Wesentlichen vor der Beleimung mit dem Klebstoff stattfindet, ist der Klebstoffverbrauch deutlich geringer als bei der Blow-Line-Beleimung bei weitgehend homogener Klebstoffverteilung.

Die weitere Bearbeitung der Lignozellulose-haltigen Zerkleinerungsprodukte mit der Klebstoffzusammensetzung kann dabei gemäß bekannten Verfahren zur Herstellung von Holzwerkstoffen, z.B. Holzwerkstoffplatten, wie OSB, Faserplatten und Spanplatten erfolgen. So können nach Streuen der Strands oder Fasern gegebenenfalls unter Vorpressen ein Verpressen der Mischung unter Wärmebehandlung erfolgen. Diese Heißpressung erfolgt gemäß bekannten Verfahren unter bekannten Bedingungen.

Die Lignozellulose-haltigen Zerkleinerungsprodukte sind dabei bevorzugt ausgewählt aus Holzspäne, Holzstrands und Holzfasern.

Damit lassen sich erfindungsgemäße Holzwerkstoffe herstellen. Diese Holzwerkstoffe sind insbesondere Faserplatten, wie HDF(hochdichte Faserplatten)- und MDF (mitteldichte Faserplatten)-Platten, aber auch OSB-Platten und Spanplatten.

Die Holzwerkstoffe sind dabei mit der erfindungsgemäßen Klebstoffzusammensetzung verklebt bzw. mit dem erfindungsgemäßen Verfahren erhältlich.

In einem weiteren Aspekt richtet sich die vorliegende Erfindung auf die Verwendung von Polyethern zur Verbesserung der Mischbarkeit von Aminoharzen mit anderen Klebstoffen, insbesondere Klebstoffen auf Isocyanatbasis oder Epoxidbasis. Die Verwendung des Polyethers in entsprechenden Klebstoffzusammensetzungen von Mischungen aus Aminoharz mit anderen Klebstoffen zeigte eine Verbesserung der Mischbarkeit dieser Aminoharze mit den weiteren Klebstoffen. Des Weiteren zeigten sich verbesserte Härtungseigenschaften und damit verbunden verbesserte Verklebeeigenschaften. Durch die Verwendung des Polyethers ist es möglich, die Mischbarkeit von Aminoharzen bei einer anschließenden Beimischung anderer Klebstoffe zu verändern und somit die Aushärtegeschwindigkeit zu verbessern, aber auch die Homogenität in der Verklebung bei Verwendung von Klebstoffzusammensetzungen umfassend ein Aminoharz und einen weiteren Klebstoff.

Schließlich stellt die vorliegende Erfindung ein Verfahren zur Herstellung von Klebstoffzusammensetzungen enthaltend einen Aminoharzklebstoff bereit. Dieses Verfahren umfasst in einem ersten Schritt das Vermischen des Aminoharzklebstoffes mit einem Polyether, wie es hierin beschrieben ist. Anschließend wird diese Mischung aus Aminoharz aus Polyether mit einem mindestens zweiten Klebstoff vermischt, um eine Klebstoffzusammensetzung mit einem Aminoklebstoff, Polyether und einem mindestens zweiten Klebstoff zu erhalten. Bevorzugt ist dieser mindestens zweite Klebstoff dabei ein Isocyanatklebstoff.

Im Folgenden wird die Erfindung mit Hilfe von einem Ausführungsbeispiel näher erläutert, ohne dass sie auf dieses beschränkt ist.

### Beispiel

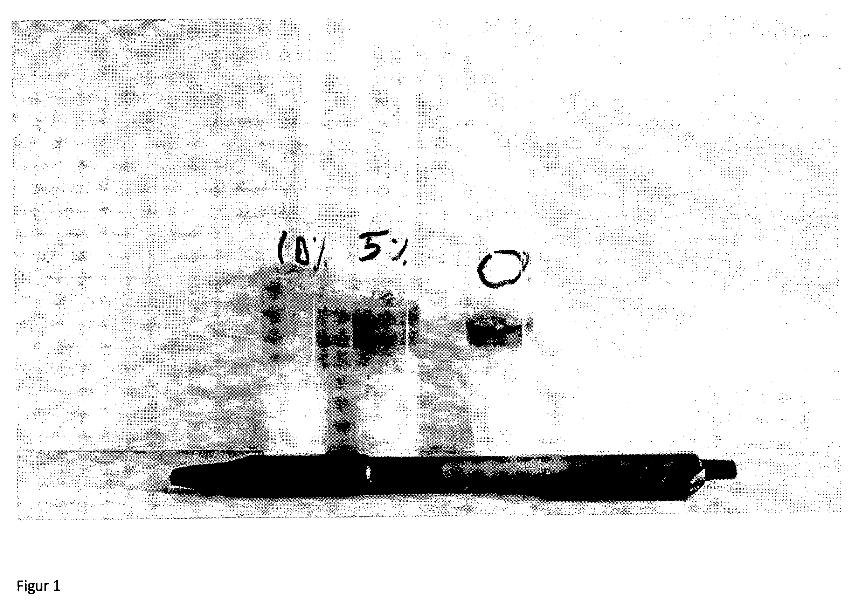

Harnstoffharze wurden mit verschiedenen Mengen Polyol (Polyol 200, mittleres Molgewicht 200g/mol) gemischt und anschließend wurde ein Isocyanatklebstoff, wie er in der Holzwerkstoffindustrie eingesetzt wird, zugegeben. Die Komponenten wurden intensiv miteinander gemischt. Zum Vergleich wurde eine Klebstoffzusammensetzung aus einer Mischung aus Isocyanat und Harnstoffharz ohne Zusatz eines Polyols hergestellt. Wie in der Tabelle 1 unten verdeutlicht, führte ein Zusatz von Polyol in geringen Mengen zu einer Verringerung der Phasenbildung der Mischungen. Die Tendenz zur Phasenbildung mit steigendem Polyolgehalt nahm deutlich ab, wie in der Figur 1 dargestellt Figur 1 zeigt die in Tabelle 1 dargestellten Proben nach Vermischung

Weiterhin konnte überraschend beobachtet werden, dass die Aushärtung des Gemisches bei Anwesenheit der Polyolkomponente deutlich schneller ablief.

**Tabelle 1**

| | **Nullprobe** | **5% Polyol 200** | **10% Polyol 200** |
|---|---|---|---|
| ***Komponente I*** | | | |
| **Harnstoffharz** | 10,0g (66%) | 10,0g (66%) | 10,0g (66%) |
| **Polyol Polyethylenglycol 200** | - | 0,5g (100%) | 1,0g (100%) |
| ***Komponente II*** | | | |
| **Isocyanat Suprasec** | 2,0g (100%) | 2,0g (100%) | 2,0g (100%) |
| | | | |
| **Phasenbildung nach Mischung** | sehr deutlich | deutlich | gering |
| **Aushärtung** | langsam | schneller | sehr schnell |

## Patentansprüche

1. Formulierung für eine Hybrid-Klebstoffzusammensetzung mit einer Komponente, gebildet aus i) mindestens einem Aminoharz, das ein Kondensationsprodukt aus einem Aldehyd mit einer Verbindung aus der Gruppe aus Harnstoff, Melamin, Benzoguanamin, Glycoluril, Acetoguanamin, Biuret oder Mischungen hiervon ist, und ii) mindestens einem Polyether, wobei der Polyether mindestens eine Ethylenoxideinheit oder einer Propylenoxideinheit, und mindestens eine Isocyanat reaktive Gruppe ausgewählt aus der Gruppe umfassend Hydroxyl, Amino, Epoxy und Thiol, umfasst, wobei diese Komponente mit i) und ii) als Mischung vorliegt.

2. Formulierung für eine Hybrid-Klebstoffzusammensetzung nach Anspruch 1, wobei der Polyether ein Polyol, insbesondere ein Polyalkylenglycol, ein oligomeres Glycerin oder ein Oligo- oder Polysaccharid ist, insbesondere wobei das Polyol eines der allgemeinen Formel (I) ist:
R₃O-[(CHR₁)ₓ-O]ₙ-R₂ (I)
wobei R₁ unabhängig voneinander ausgewählt ist aus H, OH, OR₄ oder C(O)-R₅ wobei
R₄ unabhängig voneinander ausgewählt ist aus Wasserstoff oder einer C₁-C₆ Alkylgruppe;
R₅ ist voneinander unabhängig; ausgewählt aus Wasserstoff, OH, OR₄ oder N(R₄)₂;
R₂ und R₃ sind unabhängig voneinander ausgewählt aus Wasserstoff oder einem Kohlenwasserstoff, der Heteroatome enthalten kann;
x ist unabhängig voneinander eine ganze Zahl von 1 bis 10;
n ist eine ganze Zahl von 1 bis 30;
insbesondere das Polyol, ein Polyethylenglycol oder Polypropylenglycol mit mittleren Molekülmassen von 62 bis 4.000 ist.

3. Formulierung für eine Hybrid-Klebstoffzusammensetzung nach einem der Ansprüche 1 oder 2, wobei die Menge an Polyether bezogen auf den Aminoharz in einem Bereich von 0,1 bis 20 Gew.-%, wie 0,1 bis 10 Gew.-%, bevorzugt 1 bis 10 Gew.-% liegt.

4. Formulierung für eine Hybrid-Klebstoffzusammensetzung nach einem der vorherigen Ansprüche, wobei das Aminoharz ein Harnstoffharz, insbesondere eines ausgewählt aus Harnstoff-Formaldehyd-Harz, Melamin-Harnstoff-Formaldehyd-Harz, Melamin-Harnstoff-Phenol-Formaldehyd-Harz, Protein-Phenolharze, Polyacrylate, formaldehydfreie Harze auf der Basis von polymerisierten Acrylaten oder Mischungen davon, ist.

5. Formulierung für eine Hybrid-Klebstoffzusammensetzung nach einem der vorherigen Ansprüche mit wenigstens einer weiteren Komponente aus einem weiteren Klebstoff, insbesondere einem Klebstoff auf Basis von Isocyanaten.

6. Formulierung für eine Hybrid-Klebstoffzusammensetzung nach Anspruch 5, wobei diese aus einer ersten Komponente aus mindestens einem Aminoharz vermischt mit mindestens einem Polyether gemäß einem der Ansprüche 1 bis 4 und einer zweiten Komponente, wobei diese zweite Komponente ein Klebstoff auf Basis von Isocyanaten ist, besteht.

7. Formulierung für eine Hybrid-Klebstoffzusammensetzung nach Anspruch 5 oder 6, wobei das mindestens eine Isocyanat ausgewählt aus der Gruppe bestehend aus Hexamethylendiisocyanat, m- und p-Phenylendiisocyanat, Toluylen-2,4- und Toluylen-2,6-Diisocyanat, Diphenylmethandiisocyanat in Form der 2,4'-, 2,2'- und 4,4'-Isomere und Mischungen davon, Mischungen von Diphenylmethandiisocyanaten und Oligomeren davon, Chlorophenylen-2,4-Diisocyanat, Naphthylen-1,5-Diisocyanat, Diphenylen-4,4'-Diisocyanat, 4,4'-Diisocyanat-3,3'-Dimethyl-Phenyl, 3-Methyl-Diphenylmethan-4,4'-Diisocyanat, Diphenyletherdiisocyanat, Cyclohexan-2,4- und 2,3-Diisocyanat, 1-Methylcyclohexyl-2,4- und -2,6-Diisocyanat, bis-(Isocyanatocyclohexyl)Methan, 2,4,6-Triisocyanatotolkol, 2,4,4-Triisocyanatodiphenylether, Isophorondiisocyanat, Butylendiisocyanat, Trimethylhexamethylendiisocyanat, Isocyanatomethyl-1,8-Oktandiisocyanat, Tetramethylxyloldiisocyanat, 1,4-Cyclohexandiisocyanat, Toluoldiisocyanat und Mischungen hiervon.

8. Formulierung für eine Hybrid-Klebstoffzusammensetzung nach einem der vorherigen Ansprüche, wobei die Menge an Aminoharz mindestens 30 Gew.-% bezogen auf 100 Gew.-% der Gesamtformulierung ist.

9. Formulierung für eine Hybrid-Klebstoffzusammensetzung nach einem der Ansprüche 5 bis 8, wobei das mindestens eine Isocyanat mit einer Menge von mindestens 0,5 Gew.-%, bevorzugt mindestens 1 Gew.-% bezogen auf 100 Gew.-% der Gesamtformulierung vorliegt.

10. Hybrid-Klebstoffzusammensetzung aus einer Formulierung nach einem der Ansprüche 1 bis 9, erhältlich durch Mischen einer Komponente, wie in den Ansprüchen 1 bis 4 definiert, mit der weiteren Komponente, wie in den Ansprüchen 5 oder 7 definiert.

11. Verwendung einer Formulierung oder Hybrid-Klebstoffzusammensetzung nach einem der vorherigen Ansprüche zur Herstellung von Holzwerkstoffen, insbesondere OSB-Platten, Faserplatten oder Spanplatten.

12. Verwendung eines Polyethers definiert gemäß einem der Ansprüche 1 bis 3 in einer Hybrid-Klebstoffzusammensetzung, wobei in einem ersten Schritt der Polyether mit einem Aminoharz vermischt wird, zur Verbesserung der Mischbarkeit von Aminoharzen mit anderen Klebstoffen, die anschließend der Hybrid-Klebstoffzusammensetzung zugesetzt werden.

13. Verfahren zur Herstellung von Holzwerkstoffen aus Lignocellulose-haltigen Zerkleinerungsprodukten, insbesondere zur Herstellung von OSB-Platten, Holzfaserplatten oder Spanplatten, umfassend die Verfahrensschritte:
a) Inkontaktbringen von Lignocellulose-haltigen Zerkleinerungsprodukten mit einer Formulierung für eine Hybrid-Klebstoffzusammensetzung nach einem der Ansprüche 1 bis 9 oder eine Hybrid-Klebstoffzusammensetzung nach Anspruch 10;
b) Verpressen der Mischung aus a) unter Wärmebehandlung.

14. Verfahren nach Anspruch 13, **dadurch gekennzeichnet, dass** die Komponenten der Formulierung oder der Hybrid-Klebstoffzusammensetzung im Schritt a) als eine erste Zusammensetzung aus einer Mischung aus Aminoharz und Polyether und gegebenenfalls als eine zweite Zusammensetzung ein anderer Klebstoff, insbesondere ein Isocyanat basierter Klebstoff, zu den Lignocellulose-haltigen Zerkleinerungsprodukten zudosiert werden, insbesondere **dadurch gekennzeichnet, dass** die Hybrid-Klebstoffzusammensetzung mittels Blow-Line, Mischer oder Coils aufgebracht werden.

15. Holzwerkstoff aufweisend eine Hybrid-Klebstoffzusammensetzung nach Anspruch 10 und/oder erhältlich mit einem Verfahren gemäß einem der Ansprüche 13 oder 14, bevorzugt in Form von Faserplatten, insbesondere HDF und MDF, oder in Form von OSB-Platten.

16. Verfahren zur Herstellung von Hybrid-Klebstoffzusammensetzungen enthaltend ein Aminoharz, das ein Kondensationsprodukt aus einem Aldehyd mit einer Verbindung aus der Gruppe aus Harnstoff, Melamin, Benzoguanamin, Glycoluril, Acetoguanamin, Biuret oder Mischungen hiervon ist und einen zweiten Klebstoff, insbesondere Isocyanate, umfassend den Schritt des Vermischens des Aminoharzes mit einem Polyether, wie in einem der Ansprüche 1 bis 3 definiert, und anschließend Vermischen dieser erhaltenen Aminoharz/Polyether-Mischung mit dem zweiten Klebstoff.

17. Verfahren nach Anspruch 16 zur Herstellung einer Hybrid-Klebstoffzusammensetzung aus einer Mischung aus Aminoharz und Polyether sowie Isocyanat, wobei in einem ersten Schritt das Aminoharz, wie in Anspruch 1 definiert, mit dem Polyether, wie in einem der Ansprüche 1 bis 3 definiert, vermischt wird und anschließend diese Mischung aus Aminoharz und Polyether mit einem Isocyanat, wie in einem der Ansprüche 5 oder 7 definiert, vermischt wird.

## Claims

1. A formulation for a hybrid adhesive composition with a component formed from i) at least one amino resin which is a condensation product of an aldehyde with a compound from the group of urea, melamine, benzoguanamine, glycoluril, acetoguanamine, biuret, or mixtures thereof, and ii) at least one polyether which comprises at least one ethylene oxide unit or propylene oxide unit and at least one isocyanate reactive group selected from the group encompassing hydroxyl, amino, epoxy, and thiol, this component being present with i) and ii) as a mixture.

2. The formulation for a hybrid adhesive composition as claimed in claim 1, where the polyether is a polyol, more particularly a polyalkylene glycol, an oligomeric glycerol, or an oligo- or polysaccharide, more particularly where the polyol is of the general formula (I):
R₃O-[(CHR₁)ₓ-O]ₙ-R₂ (I)
where R₁ independently at each occurrence is selected from H, OH, OR₄, or C(O)-R₅, where
R₄ independently at each occurrence is selected from hydrogen or a C₁-C₆ alkyl group;
R₅ is, independently at each occurrence, selected from hydrogen, OH, OR₄, or N(R₄)₂;
R₂ and R₃ are selected independently of one another from hydrogen or a hydrocarbon which may contain heteroatoms;
x independently at each occurrence is an integer from 1 to 10;
n is an integer from 1 to 30;
more particularly the polyol being a polyethylene glycol or polypropylene glycol having average molecular masses of 62 to 4000.

3. The formulation for a hybrid adhesive composition as claimed in either of claims 1 and 2, where,the amount of polyether, based on the amino resin, is in a range from 0.1 to 20 wt%, such as 0.1 to 10 wt%, preferably 1 to 10 wt%.

4. The formulation for a hybrid adhesive composition as claimed in any of the preceding claims, where the amino resin is a urea resin, more particularly one selected from urea-formaldehyde resin, melamine-urea-formaldehyde resin, melamine-urea-phenol-formaldehyde resin, protein-phenolic resins, polyacrylates, formaldehyde-free resins based on polymerize acrylates, or mixtures thereof.

5. The formulation for a hybrid adhesive composition as claimed in any of the preceding claims, with at least one further component comprising a further adhesive, more particularly an adhesive based on isocyanates.

6. The formulation for a hybrid adhesive composition as claimed in claim 5, consisting of a first component comprising at least one amino resin mixed with at least one polyether as set forth in any of claims 1 to 4, and a second component which is an adhesive based on isocyanates.

7. The formulation for a hybrid adhesive composition as claimed in claim 5 or 6, where the at least one isocyanate is selected from the group consisting of hexamethylene diisocyanate, m- and p-phenylene diisocyanate, tolylene 2,4- and tolylene 2,6-diisocyanate, diphenylmethane diisocyanate in the form of the 2,4', 2,2', and 4,4' isomers and mixtures thereof, mixtures of diphenylmethane diisocyanates and oligomers thereof, chlorophenylene 2,4-diisocyanate, naphthylene 1,5-diisocyanate, diphenylene 4,4'-diisocyanate, 4,4'-diisocyanate-3,3'-dimethylphenyl, 3-methyldiphenylmethane 4,4'-diisocyanate, diphenyl ether diisocyanate, cyclohexane 2,4- and 2,3-diisocyanate, 1-methylcyclohexyl 2,4- and 2,6-diisocyanate, bis(isocyanatocyclohexyl)methane, 2,4,6-triisocyanatotoluol, 2,4,4-triisocyanatodiphenyl ether, isophorone diisocyanate, butylene diisocyanate, trimethylhexamethylene diisocyanate, isocyanatomethyl-1,8-octane diisocyanate, tetramethylxylene diisocyanate, 1,4-cyclohexane diisocyanate, toluene diisocyanate, and mixtures thereof.

8. The formulation for a hybrid adhesive composition as claimed in any of the preceding claims, where the amount of amino resin is at least 30 wt%, based on 100 wt% of the overall formulation.

9. The formulation for a hybrid adhesive composition as claimed in any of claims 5 to 8, where the at least one isocyanate is present with an amount of at least 0.5 wt%, preferably at least 1 wt%, based on 100 wt% of the overall formulation.

10. A hybrid adhesive composition comprising a formulation as claimed in any of claims 1 to 9, obtainable by mixing a component as defined in claims 1 to 4 with the further component as defined in claim 5 or 7.

11. The use of a formulation or hybrid adhesive composition as claimed in any of the preceding claims for producing woodbase materials, more particularly OSB boards, fiberboards, or chipboards.

12. The use of a polyether defined according to any of claims 1 to 3 in a hybrid adhesive composition, where the polyether is mixed with an amino resin in a first step, for improving the miscibility of amino resins with other adhesives which are added subsequently to the hybrid adhesive composition.

13. A process for producing woodbase materials from lignocellulosic products of comminution, more particularly for producing OSB boards, wood fiberboards, or chipboards, comprising the process steps of:
a) contacting lignocellulosic products of comminution with a formulation for a hybrid adhesive composition as claimed in any of claims 1 to 9 or a hybrid adhesive composition as claimed in claim 10;
b) pressing the mixture from a) with heat treatment.

14. The process as claimed in claim 13, **characterized in that** the components of the formulation or of the hybrid adhesive composition, comprising as a first composition a mixture of amino resin and polyether and optionally, as a second composition, a different adhesive, more particularly an isocyanate based adhesive, are metered in step a) into the lignocellulosic products of comminution, more particularly **characterized in that** the hybrid adhesive composition are applied by means of blowline, mixer, or coil.

15. A woodbase material comprising a hybrid adhesive composition as claimed in claim 10 and/or obtainable by a process as claimed in either of claims 13 and 14, preferably in the form of fiberboards, more particularly HDF and MDF, or in the form of OSB boards.

16. A process for producing hybrid adhesive compositions comprising an amino resin which is a condensation product of an aldehyde with a compound from the group of urea, melamine, benzoguanamine, glycoluril, acetoguanamine, biuret, or mixtures thereof and a second adhesive, more particularly isocyanates, comprising the step of mixing the amino resin with a Polyether as defined in any of claims 1 to 3 and subsequently mixing this resultant amino resin/polyether mixture with the second adhesive.

17. The process as claimed in claim 16 for producing a hybrid adhesive composition from a mixture comprising amino resin and polyether and also isocyanate, where in a first step the amino resin as defined in claim 1 is mixed with the polyether as defined in any of claims 1 to 3 and subsequently this mixture of amino resin and polyether is mixed with an isocyanate as defined in either of claims 5 and 7.

## Revendications

1. Formulation d' une composition hybride d'adhésif, à un composant qui est constitué par i) au moins une résine amino, qui est un produit de condensation d'un aldéhyde avec un composé du groupe formé par l'urée, la mélamine, la benzoguanamine, le glycolurile, l'acétoguanamine, le biuret ou des mélanges de ceux-ci, et par ii) au moins un polyéther, le polyéther comprenant au moins une unité d'oxyde d'éthylène ou une unité d'oxyde de propylène et au moins un groupe réactif avec isocyanate choisi dans le groupe comprenant hydroxyle, amino, époxy et thiol, dans lequel ce composant avec i) et ii) est présent sous forme d'un mélange.

2. Formulation pour une composition adhésive hybride selon la revendication 1, le polyéther étant un polyol, en particulier un polyalkylèneglycol, un glycérol oligomère ou un oligosaccharide ou un polysaccharide, le polyol étant en particulier un polyol de formule générale (I) :
R₃O-[(CHR₁)ₓ-O]ₙ-R₂ (I)
les radicaux R₁ étant choisis, indépendamment les uns des autres, parmi H, OH, OR₄ ou C(O)-R₅ R₄ étant choisi, indépendamment l'un de l'autre, parmi hydrogène ou un groupe C₁-C₆-alkyle ;
R₅ étant choisi, indépendamment l'un de l'autre, parmi hydrogène, OH, OR₄ ou N(R₄)₂ ;
R₂ et R₃ étant choisis, indépendamment l'un de l'autre, parmi hydrogène ou un groupe hydrocarboné qui peut contenir des hétéroatomes ;
x représente, indépendamment l'un de l'autre, un nombre entier de 1 à 10 ;
n vaut un nombre entier de 1 à 30 ;
le polyol étant en particulier un polyéthylèneglycol ou un polypropylèneglycol présentant des masses moléculaires moyennes de 62 à 4000.

3. Formulation pour une composition adhésive hybride selon l'une quelconque des revendications 1 ou 2, la quantité de polyéther, par rapport à la résine amino, se situant dans une plage de 0,1 à 20 % en poids, par exemple 0,1 à 10% en poids, de préférence de 1 à 10% en poids.

4. Formulation pour une composition adhésive hybride selon l'une quelconque des revendications précédentes, la résine amino étant une résine d'urée, en particulier choisie parmi une résine d'urée-formaldéhyde, une résine de mélamine-urée-formaldéhyde, une résine de mélamine-urée-phénol-formaldéhyde, les résines de protéine-phénol, les polyacrylates, les résines exemptes de formaldéhyde à base d'acrylates polymérisés ou leurs mélanges.

5. Formulation pour une composition adhésive hybride selon l'une quelconque des revendications précédentes, avec au moins un autre composant d'un autre adhésif, en particulier un adhésif à base d'isocyanates.

6. Formulation pour une composition adhésive hybride selon la revendication 5 conformément à laquelle ledit mélange avec au moins un polyéther d'un premier composant d'au moins une résine amino selon l'une quelconque des revendications 1 à 4 et un second composant, ledit second composant est un adhésif à base d'isocyanates.

7. Formulation pour une composition adhésive hybride selon la revendication 5 ou 6, ledit au moins un isocyanate étant choisi dans le groupe constitué par l'hexaméthylènediisocyanate, le m-phénylènediisocyanate et le p-phénylènediisocyanate, le toluylène-2,4-diisocyanate et le toluylène-2,6-diisocyanate, le diphénylméthanediisocyanate sous forme des isomères 2,4', 2,2' et 4,4' et leurs mélanges, les mélanges de diphénylméthanediisocyanates et leurs oligomères, le chlorophénylène-2,4-diisocyanate, le naphtylène-1,5-diisocyanate, le diphénylène-4,4'-diisocyanate, le 4,4'-diisocyanate-3,3'-diméthylphényle, le 3-méthyl-diphénylméthane-4,4'-diisocyanate, le diphénylétherdiisocyanate, le cyclohexane-2,4-diisocyanate et le cyclohexane-2,3-diisocyanate, le 2,4-diisocyanate et le 2,6-diisocyanate de 1-méthylcyclohexyle, le bis-(isocyanatocyclohexyl)méthane, le 2,4,6-triisocyanatotoluène, le 2,4,4-triisocyanatodiphényléther, l'isophoronediisocyanate, le butylènediisocyanate, le triméthylhexaméthylènediisocyanate, l'isocyanatométhyl-1,8-octanediisocyanate, le tétraméthylxylènediisocyanate, le 1,4-cyclohexanediisocyanate, le tolidinediisocyanate et leurs mélanges.

8. Formulation pour une composition adhésive hybride selon l'une quelconque des revendications précédentes, la quantité de résine amino étant d'au moins 30% en poids par rapport à 100% en poids de la formulation totale.

9. Formulation pour une composition adhésive hybride selon l'une des revendications 5 à 8, ledit au moins un isocyanate représentant une quantité d'au moins 0,5% en poids, de préférence d'au moins 1% en poids par rapport à 100% en poids de la formulation totale.

10. Composition adhésive hybride d'une formulation selon l'une quelconque des revendications 1 à 9, pouvant être obtenue par mélange d'un composant tel que défini dans la revendication 1 à 4 avec le composant additionnel tel que défini dans les revendications 5 à 7.

11. Utilisation d'une formulation ou d'une composition adhésive hybride selon l'une quelconque des revendications précédentes pour la fabrication de matériaux à base de bois, en particulier de panneaux d'OSB, de panneaux de fibres ou de panneaux d'aggloméré.

12. Utilisation d'un polyéther défini selon l'une quelconque des revendications 1 à 3 dans une composition adhésive hybride, le polyéther étant mélangé dans une première étape avec une résine amino, pour l'amélioration de l'aptitude au mélange de résines amino avec d'autres adhésifs.

13. Procédé pour la fabrication de matériaux à base de bois à partir de produit de broyage contenant de la lignocellulose, en particulier pour la fabrication de panneaux d'OSB, de panneaux de fibres de bois ou de panneaux d'aggloméré, comprenant les étapes de procédé consistant à
a) mettre en contact des produits de broyage contenant de la lignocellulose avec une formulation pour une composition adhésive hybride selon l'une quelconque des revendications 1 à 9 ou une composition adhésive hybride selon la revendication 10 ;
b) presser le mélange de l'étape a) sous traitement thermique.

14. Procédé selon la revendication 13, **caractérisé en ce qu'**on dose les composants de la composition adhésive hybride dans l'étape a) sous forme d'une première composition constituée par la résine amino et le polyéther et, sous forme d'une deuxième composition, un autre adhésif, en particulier un adhésif à base d'isocyanate, dans le produit de broyage contenant de la lignocellulose, en particulier **caractérisé en ce que** la composition adhésive est appliquée au moyen d'une ligne de soufflage, d'un mélangeur ou de bobines.

15. Matériau à base de bois présentant une composition adhésive hybride selon la revendication 10 et/ou pouvant être obtenu par un procédé selon l'une quelconque des revendications 13 ou 14, de préférence sous forme de panneaux de fibres, en particulier du HDF et du MDF, ou sous forme de panneaux OSB.

16. Procédé pour la préparation de compositions adhésives hybrides, contenant une résine amino qui est un produit de condensation d'un aldéhyde avec un composé du groupe formé par l'urée, la mélamine, la benzoguanamine, le glycolurile, l'acétoguanamine, le biuret ou des mélanges de ceux-ci, et un deuxième adhésif, dans des isocyanates particuliers, comprenant l'étape de mélange de la résine amino avec du polyéther, comme défini dans l'une quelconque des revendications 1 à 3, et mélange consécutif de ce mélange résine amino/polyéther obtenu avec le deuxième adhésif.

17. Procédé selon la revendication 16 pour la préparation d'une composition adhésive hybride d'un mélange de résine amino et de polyéther et isocyanate, dans lequel, dans une première étape, la résine amino telle que définie dans la revendication 1, est mélangée avec le polyéther tel que défini dans l'une quelconque des revendications 1 à 3, et puis ce mélange de résine amino et du polyéther est mélangée avec un isocyanate, tel que défini dans l'une quelconque des revendications 5 ou 7.
